# EUROPEAN PATENT SPECIFICATION

(11) **EP 2 583 739 B1**
(45) Date of publication and mention of the grant of the patent: **08.04.2015**
(21) Application number: 12189013.1
(22) Date of filing: 18.10.2012
(51) Int. Cl.: B01D 53/26, B65D 81/26, F24F 3/14

(54) **Moisture-absorbing device**
Luftentfeuchter
Dispositif antihumidité

(30) Priority: 20.10.2011 ES 201101030 U
(43) Date of publication of application: 24.04.2013
(73) Proprietor: Zyxtudio diseño e innovación SL, 46003 Valencia (ES)
(72) Inventor: Blasco Feo, D. Vicente, 46003 VALENCIA (ES)
(74) Representative: Soler Lerma, Santiago

(56) References cited:
- FR-A1- 2 578 444
- FR-A2- 2 627 400
- JP-A- 7 328 371
- JP-A- 9 057 045
- US-A- 4 319 679
- US-A- 5 215 561

## Description

As implied by its name, the present invention relates to a moisture-absorbing device of the type comprising a receptacle that is open on its top base, a grid closing said top base on which rests a pill of hygroscopic material and a cage enclosing said pill to prevent contact with it, wherein the grid and the receptacle are constructed as a single piece and the cage has dimensions and shape allowing it to be housed inside the lower receptacle during transport or exhibition.

The field of the art to which it belongs is that of household drugstore products.

### BACKGROUND

Numerous moisture-absorbing devices are known whose operation consists in placing in contact with the atmosphere a suitable amount of hygroscopic material, normally salts, such that this material will absorb moisture from the environment and precipitate it in the form of water.

The device housing the hygroscopic material can adopt different forms, but in general they comprise a body in contact with the atmosphere inside which is the hygroscopic material, this body in turn being connected to a lower body that receives the water obtained by precipitation of the ambient moisture.

There are devices in which these two bodies are made of bags of plastic material, an example of which is Spanish Utility Model U200800372 that can be hung, Spanish Patent ES 2217827 that incorporates a rigid tube as a support, and Spanish Patent ES 2190110 that is also self-supporting by means of a cardboard structure and that incorporates elements to allow hanging the device.

Another type of devices have a receptacle, an independent grid and a top cage, wherein the hygroscopic matter is placed on the grid, an example of this being Spanish Utility Model ES1038304U, which is close to the disclosed invention.

In the above-cited model, the receptacle can contain for transport and exhibition purposes both the cage and a pill of hygroscopic material, the assembly being closed by the intermediate grid.

However, in order to attach said grid it is necessary to rotate it, which requires it to be circular in shape and means that the same rotation in the opposite sense will open it, so that the commercial presentation of the product requires an outer packaging, with the corresponding increase in cost and space.

### DESCRIPTION OF THE INVENTION

To solve the aforementioned drawbacks, the invention disclosed comprises a receptacle connected by a hinge to a grid that closes it horizontally on its top base and a cage placed above it that can contain inside it a pill of hygroscopic material.

The cage has smaller dimensions than the receptacle and a shape allowing it to be housed inside the receptacle for transport and exhibition for sale, although this requires inverting the position of the cage.

With the device assembled for transport, the cage, in inverted position, is housed inside the receptacle and in turn houses the pill of hygroscopic material, the assembly being closed by the grid that is secured by the hinge and by fastening means, preferably of the pressure fastening type.

Attached to the top of the grid in a manner allowing its easy removal is a descriptive or advertising sheet for the product.

In order to use the device the aforementioned sheet must be removed, the grid opened and the pill of hygroscopic material and the cage extracted; then the grid must be closed and the pill placed on it, and the cage secured onto the assembly.

In a preferred embodiment of the invention, the receptacle and the grid are constructed in a single piece, although construction as two independent parts is not ruled out provided at least one of its sides is permanently joined by a union allowing it to swivel and open.

To leave the grid attached to the receptacle in a horizontal position, they are peripherally provided with fastening means that act by vertical pressure, with no need for rotation, such as a clip-on device.

The device thus configured allows execution in any format, not only circular, so that ergonomic improvements may be introduced.

To aid a better understanding of the disclosed invention, a description of the drawings is provided below.

### BRIEF DESCRIPTION OF THE DRAWINGS

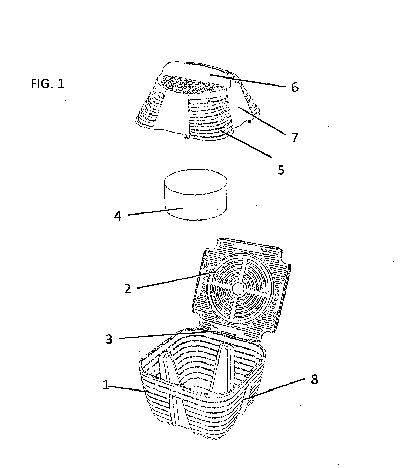

FIGURE 1 is an exploded view of different parts of the invention disclosed, showing the receptacle (1), the grid (2) in its open position, the area of union between the grid and the receptacle comprising the hinge (3), the pill of hygroscopic material (4), and the cage (5) that comprises a handle (6) and a series of struts (7) which, together with some grooves in the receptacle (8), simplify the handling of the device.

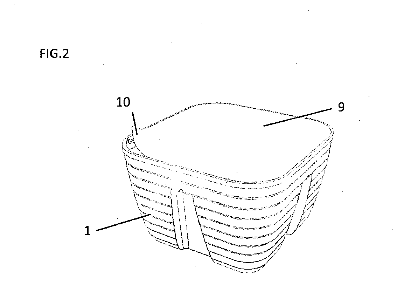

FIGURE 2 is a representation of the device closed for transport and exhibition, such that inside the receptacle (1) but not shown are the cage, in inverted position, the pill of hygroscopic material, and fastened to the grid can be seen a sheet (9) that incorporates means such as a tab (10) to aid its removal.

### DESCRIPTION OF AN EMBODIMENT OF THE INVENTION

An embodiment of the invention is described herein for purposes of illustration only without being limiting in any way.

The moisture-absorbing device comprises:
A receptacle (1) that is open on its top base, which is larger than its bottom base.
A grid joined to the receptacle by hinge elements.
A pill of hygroscopic material.
A cage for housing the pill of hygroscopic material.

Both the top and bottom base of the receptacle have a square shape, with rounded edges and corners.

The receptacle and the grid are constructed in a singe piece and joined on one of their sides.

The area of union between the receptacle and the grid is flexible, acting as a hinge.

Provided on the perimeter of the grid and of the top base of the receptacle are means for fastening the grid to the receptacle with the grid is closed, these means being of the type that act by vertical pressure, such as clipping means.

The shape of the cage is that of a grooved cupola with a bottom base larger than the top base.

The bottom base of the cage, shown open, is smaller than the top base of the receptacle, and the top base of the cage is smaller than the bottom base of the receptacle.

The cage has form means for direct or indirect fastening to the receptacle.

On the top base of the cage is a vertical extension by way of a handle.

To transport the product, the cage in the inverted position is placed inside the receptacle and in turn contains the pill of hygroscopic material, the grid in the closed position is attached to the receptacle by the hinges and the additional fastening means, and a sheet is affixed onto the grid to close the assembly and provide information on the product.

## Claims

1. MOISTURE-ABSORBING DEVICE of the type comprising a receptacle (1) with a bottom base that is smaller than its top base, the latter being open, a grid (2) that covers the top base of the receptacle (1), a pill of hygroscopic material (4) that during operation is housed above said grid (2) and a cage (5) in the form of a grooved cupola with an open bottom base that is larger than its top base and which contains said hygroscopic material, **characterised in that** the receptacle (1) and the grid (2) are connected by a hinge (3) and are also provided with means for immobilising said grid (2) in a horizontal position, the bottom base of the receptacle (1) is larger than the top base of the cage (5), and the top base of the receptacle (1) is larger than the bottom base of the cage (5), so when the cage (5) is turned over, that is, with its greater base on the top, it fits entirely inside the receptacle (1) and, **in that** position with the cage (5) inside the receptacle (1) and the grid (2) secured in the horizontal position, there is enough free space inside to house a pill of hygroscopic material (4).

2. MOISTURE-ABSORBING DEVICE according to claim 1, **characterised in that** the means that allow immobilising the grid in a horizontal position act by vertical pressure.

3. MOISTURE-ABSORBING DEVICE according to claim 1, **characterised in that** the receptacle (1) and the grid (2) are constructed in a single piece.

4. MOISTURE-ABSORBING DEVICE according to claim 1, **characterised in that** on the top base of the cage there is a long and narrow vertical extension (6).

5. MOISTURE-ABSORBING DEVICE according to claim 1, **characterised in that** during transport and exhibition for sale the cage is inside the receptacle and the grid is secured in the horizontal position and affixed to the grid is a removable sheet (9).

6. MOISTURE-ABSORBING DEVICE according to claim 1, **characterised in that** the sides of the receptacle have vertical grooves (8).

7. MOISTURE-ABSORBING DEVICE according to claim 1, **characterised in that** the sides of the cage have vertical struts (7).

## Patentansprüche

1. ANTIFEUCHTE-VORRICHTUNG, die neben einer Schale (1), deren untere Grundfläche kleiner ist als ihre offene obere Grundfläche, auch ein Gitter (2) umfasst, das ebendiese obere Grundfläche der Schale (1) abdeckt, sowie ein Stück eines hygroskopischen Materials (4), die bei der Verwendung auf dem erwähnten Gitter (2) ruht, und ein als ausgekehlte Kuppel ausgeführter Käfig (5), dessen offene untere Grundfläche größer ist als seine obere Grundfläche und der das genannte hygroskopische Material beherbergt, **dadurch gekennzeichnet, dass** die Schale (1) und das Gitter (2) durch ein Scharnier (3) miteinander verbunden sind und außerdem über Mittel zur Feststellung dieses Gitters (2) in waagerechter Position verfügen, denn die untere Grundfläche der Schale (1) ist größer als die obere Grundfläche des Käfigs (5) und die obere Grundfläche der Schale (1) ist größer als die untere Grundfläche des Käfigs (5), sodass der Käfig (5) in umgedrehtem Zustand, also mit seiner größeren Grundfläche nach oben, vollständig in die Schale (1) passt, wobei sich der Käfig (5) in der Schale befindet (1), das Gitter (2) in waagerechter Position befestigt ist und der Freiraum im Inneren genügt, um ein Stück eines hygroskopischen Materials (4) aufzunehmen.

2. ANTIFEUCHTE-VORRICHTUNG nach Anspruch 1, **dadurch gekennzeichnet, dass** die Mittel zur Feststellung des Gitters in waagerechter Position durch senkrechten Druck wirken.

3. ANTIFEUCHTE-VORRICHTUNG nach Anspruch 1, **dadurch gekennzeichnet, dass** die Schale (1) und das Gitter (2) als ein einziges Teil ausgeführt sind.

4. ANTIFEUCHTE-VORRICHTUNG nach Anspruch 1, **dadurch gekennzeichnet, dass** auf der oberen Grundfläche des Käfigs eine schmale und lange senkrechte Fortsetzung (6) angebracht ist.

5. ANTIFEUCHTE-VORRICHTUNG nach Anspruch 1, **dadurch gekennzeichnet, dass** sich der Käfig beim Transport und bei der Verkaufsausstellung in der Schale befindet, während das Gitter in waagerechter Position befestigt ist und auf dem Gitter eine abnehmbare Schicht (9) angebracht ist.

6. ANTIFEUCHTE-VORRICHTUNG nach Anspruch 1, **dadurch gekennzeichnet, dass** die Seiten der Schale über senkrechte Kanäle (8) verfügen.

7. ANTIFEUCHTE-VORRICHTUNG nach Anspruch 1, **dadurch gekennzeichnet, dass** die Seiten der Schale über senkrechte Stützen (7) verfügen.

## Revendications

1. Dispositif anti-humidité du type comprenant une cuvette (1) dont la base inférieure est plus petite que sa base supérieure qui se trouve ouverte, une grille (2) couvrant la base supérieure de la cuvette (1), une pastille de matière hygroscopique (4) qui, pendant son utilisation, est logée sur ladite grille (2) et une cage (5) sous forme de coupole rainurée dont la base inférieure, ouverte, est plus grande que sa base supérieure et qui contient ladite matière hygroscopique **caractérisé en ce que** la cuvette (1) et la grille (2) sont unies par une charnière (3) et elles disposent, en outre, de moyens pour immobiliser ladite grille (2) en position horizontale, **en ce que** la base inférieure de la cuvette (1) est plus grande que la base supérieure de la cage (5) et la base supérieure de la cuvette (1) est plus grande que la base inférieure de la cage (5) de manière qu'en étant la cage (5) retournée, c'est à dire avec sa base plus grande en position supérieure, elle peut être logée complètement dans la cuvette (1), la cage (5) étant dans la cuvette (1) et la grille (2) étant fixée en position horizontale, l'espace libre à l'intérieur est suffisant pour loger une pastille de matière hygroscopique (4).

2. Dispositif anti-humidité selon la revendication 1, **caractérisé en ce que** les moyens permettant l'immobilisation de la grille en position horizontale agissent par pression verticale.

3. Dispositif anti-humidité selon la revendication 1, **caractérisé en ce que** la cuvette (1) et la grille (2) sont réalisées en une seule pièce.

4. Dispositif anti-humidité selon la revendication 1, **caractérisé en ce que** sur la base supérieure de la cage il existe une prolongation verticale (6) étroite et longue.

5. Dispositif anti-humidité selon la revendication 1, **caractérisé en ce que** pendant son transport et son exposition pour sa vente, la cage se trouve à l'intérieur de la cuvette et la grille est fixée en position horizontale, et sur la grille est fixée une feuille amovible (9).

6. Dispositif anti-humidité selon la revendication 1, **caractérisé en ce que** les côtés latéraux de la cuvette possèdent des canaux verticaux (8).

7. Dispositif anti-humidité selon la revendication 1, **caractérisé en ce que** les côtés latéraux de la cage présentent des montants verticaux (7).
